# EUROPEAN PATENT APPLICATION

(11) **EP 2 289 688 A1**
(43) Date of publication of application: **02.03.2011**
(21) Application number: 09768808.9
(22) Date of filing: 26.06.2009
(51) Int. Cl.: B29C 49/30, B29C 49/38, B29C 55/28, B29K 96/00

(54) **FILM BLOWING MACHINE ROTARY DIE HEAD FOR STARCH BIODEGRADATION MATERIAL**

(30) Priority: 27.06.2008 CN 200810048202
(71) Applicant: Hubei Yudi Environmental Technology Co., Ltd., Wuhan, Hubei 4300015 (CN)
(72) Inventor: WU, Ping, Hubei 430015 (CN)
(74) Representative: Martin, Didier Roland Valéry
(86) International application number: PCT/CN2009/072491
(87) International publication number: WO 2009/155883

(57) **Abstract**

A film blowing machine rotary die head for starch biodegradation material comprises a core die part and an external body part which are mounted coaxially. The core die part comprises a spiral core die (22) which is sheathed on a central shaft (15) and a rotation core die (20) which is fixed at the upper end of the central shaft (15); the spiral core die (22) and the rotation core die (20) are attached to each other; the central shaft (15) is driven by a motor (2) so as to drive the rotation core die (20) to rotate correspondingly to the spiral core die (22). The external body part comprises an internal die sleeve (21), an external die sleeve (19) and a mouth die sleeve (23). The internal die sleeve (21), the mouth die sleeve (23), the spiral core die (22) and the rotation core die (20) together form a flowing and forming passage.

## Description

### Technical Field

The invention relates to a film blowing machine and, more particularly, to a rotating die of a film blowing machine for starch-based biodegradable material.

### Background Art

The process of blowing film molding is as below. Press plastic material from a front end of a screw extruder into a die such that fluid plastic material turns into siphonula through the die. And then the siphonula is puffed up uniformly and freely to tubular film with a bigger diameter by the compressed air from the bottom of the die, and meanwhile the tubular film is extended longitudinally and cools down when it is draught up. After that, the tubular film is flattened by a herringbone plate and draught by a drawing roller, finally rolled up. As the blowing film technique is more and more mature and perfect, varies plastic films have been applied into many fields, such as industry, agriculture, daily life and so on. Plastic films are polymer material products. When the plastic film products bring people great convenience in use, improve the efficiency and decrease the intensity of labor, a large amount of scrap films come into white pollution hard to be degraded. How to properly handle with the scrap films becomes a big problem.

In order to solve the above-mentioned problem, the scientific researchers are always trying to replace the chemical plastic with natural biodegradable materials having high starch content. Multifarious starch films which can be partially or completely biodegraded have been developed, such as a completely biodegradable film disclosed in a specification of Patent CN1293137C. The biodegradable film with high starch content can be melted by the moisture in the surroundings quickly and broken down by the microorganism in the soil fast, even can be transformed into fertilizer, which can ease the pollution problem caused by wasted plastic films in a great degree. And it will have broad market prospect when people more and more care about the environment today. However, inherent characteristics of the starch-based biodegradable materials bring a new problem that can not be manufactured in batches.

There are reasons as follow. Firstly, compared with common high density polyethylene and low density polyethylene, starch-based biodegradable material has high viscosity and its fluidity is poor, which not only easily causes a ununiform phenomenon of the materials in a mixed plasticizing process, but also is apt to increase the pressure in the die dramatically such that the conventional die is hard to mould the starch-based biodegradable material exactly. Secondly, the starch-based biodegradable material has a bigger shear stress, so the frictional heating in the mixed plasticizing process will increase greatly. Under this condition, the conventional die for plastic blowing film can not control the processing temperature accurately. Thirdly, the starch-based biodegradable material is sensitive to the processing temperature. Excessive self-heating in the course of processing will cause the material burnt and change its property. So the processing temperature of the materials has to be controlled rigorously, which can not be achieved by the conventional die.

By this token, the blowing film principle of the starch-based biodegradable material is essentially the same as that of common plastic, but prior dies of the film blowing machines can not solve the problems caused by the new material due to its high viscosity, poor fluidity and sensitivity to the processing temperature. If manufacture starch-based biodegradable films with the prior blowing film product line, the output will be low and the rate of good product is also low, which can not meet requirements of mass industrial production.

### Summary of the Invention

An object of the present invention is to provide a rotating die of a film blowing machine for starch-based biodegradable material, which can obtain a high qualified product rate and is applicable to mass industrial production to overcome the drawbacks of blowing molding of biological material using a conventional film blowing machine.

To achieve the above-mentioned object, the rotating die of the film blowing machine for starch-based biodegradable material according to the present invention comprises a core mould and an outer body which are disposed concentric to form a material annular gap flow channel.

The core mould comprises a spiral core mould sleeved on a center pivot through a supporting bearing and a rotating core mould fixed on a top end of the center pivot by locknuts. An inner coniform surface of a top end of the spiral core mould is jointed and cooperated with an outer coniform surface of a bottom end of the rotating core mould.
The outer body comprises an inner die casing sleeved on the spiral core mould, an outer die casing in transition fit with the inner die casing and a mouth die casing surrounding the rotating core mould. An upper end of the inner die casing is fixed with a lower end of the mouth die casing through fixing elements. An outer circulation cooling water way is formed between the outer wall of the inner die casing and an inner wall of the outer die casing.

The inner walls of the inner die casing and the mouth die casing and the outer walls of the spiral core mould and the rotating core mould form a material flowing and molding channel which comprises a herringbone feed-in slot, spiral conveying slots, an annular gap buffer zone, a tapering cone passage, an annular loosing cavity and a final molding gap in turn from bottom to top.

The core mould and the outer body are mounted on a die base fixed on a connection plate. A lower end of the center pivot passes through the connection plate and connects with a big gear. The connection plate further has a motor mounted thereon whose output end is connected with a small gear. The small gear and the big gear are engaged with each other so as to drive the center pivot and the rotating core mould at the top end of the rotating core mould to rotate relative to the spiral core mould.

Further, the center pivot has a deep blind hole formed in an axis thereof, in which an internal circulation cooling pipe is provided and at an end of which a rotating joint cooperated with the internal circulation cooling pipe is disposed to effectively control the temperature of the core mould by water cooling.

Moreover, the mouth die casing has a spiral circulation cooling water way in the wall thereof, which can work together with the outer circulation cooling water way to enhance the temperature control effect of the outer body.

In comparison with of the conventional film blowing machines, the invention has the following advantages.
Firstly, the material flowing and molding channel consists of the herringbone feed-in slot, spiral conveying slots, the annular gap buffer zone, the tapering cone passage, the annular loosing cavity and the final molding gap which are smoothly connected to form one channel. The six parts have their respective functions, as well as a cooperation function. The herringbone feed-in slot can divide the materials efficiently and ensure the materials to be transported equably under a condition that the flow rate and the flow speed are ensured. The spiral conveying slot can change the internal stress of the materials' structure, which not only can make the temperature of the materials to be more even, but also can further plasticizing the materials in the course of flowing. The annular gap buffer zone can release the pressure in the plasticizing materials temporarily such that the materials can achieve a free and uniform state. The tapering cone passage can increase the flow speed of the materials and reestablish the pressure in the materials. The annular loosing cavity can release the pressure in the plasticizing materials again to eliminate changes in the course of flowing to make the state to be further free and uniform. The final molding gap can establish a pressure for film blowing again. Through the process including release pressure twice and establish pressure twice, the material have a more even temperature, pressure and flow speed, which creates good conditions for film blowing molding.

Secondly, the herringbone feed-in slot, the spiral conveying slots, the annular gap buffer zone and the tapering conical passage tapering cone passage of the designed material flowing and molding channel are static, through which the materials can be transported, mixed and plasticized steadily. And the annular loosing cavity and the final molding gap are rotating dynamically. The core mould is driven to slowly rotate with a speed of 2RPM by the motor and the slowdown gearing. The materials in the annular loosing cavity and the final molding gap move axially and tangentially driven by the rotating core mould, which can eliminate the ununiformity caused by the high viscosity and poor fluidity of the starch-based biodegradable material and further eliminates the internal stress and the velocity deviation of the materials such that the materials can be distributed much evenly for laying a good foundation for film blowing.

Thirdly, the designed outer circulation cooling water way surrounds the material flowing and molding channel, so the heat generated in the inner die casing and the outer die casing can be absorbed by adjusting the flowing speed and flowing rate of the cooling water so as to control the frictional heating of the materials generated in the course of mixing and plasticizing. The temperature in each way can be adjusted expediently to maintain it in a required range. The internal circulation cooling pipe in the blind hole in the center pivot can cool the core mould from the inside of the material flowing and molding channel and cooperate with the outer circulation cooling water way to further improve the accuracy of the temperature control of the materials. The spiral circulation cooling water way in the wall of the mouth die casing can accurately control the material temperature in the final molding gap and ensure that the materials are blown molding at a temperature suitable for the characteristics thereof and are applicable to mass industrial production.

As described above, the rotating die of the film blowing machine according to the present invention has a material flowing and molding channel combining static and dynamic parts, and the specific inner and outer circulation water cooling systems such that the mixing, pressure release, pressure increase and temperature control of the materials can tally with the characteristics thereof, which can effectively solve the problem caused by that the starch-based biodegradable materials have high viscosity, poor fluidity and is sensitive to processing temperature. The film blowing speed is fast, the product quality is steady, and the good product rate is high. The whole production process can be auto-controlled or controlled by people, and meet the requirements of mass industrial production. Moreover, the rotating die of a film blowing machine according to the present invention can be mounted on a conventional film blowing machine, so the starch-based biodegradable film can be produced without adjusting the prior product line a lot. The starch-based biodegradable films have a low cost and can replace the plastic films to stop the white pollution, and therefore obtain good economic benefits and social benefits.

### Brief Description of the Drawings

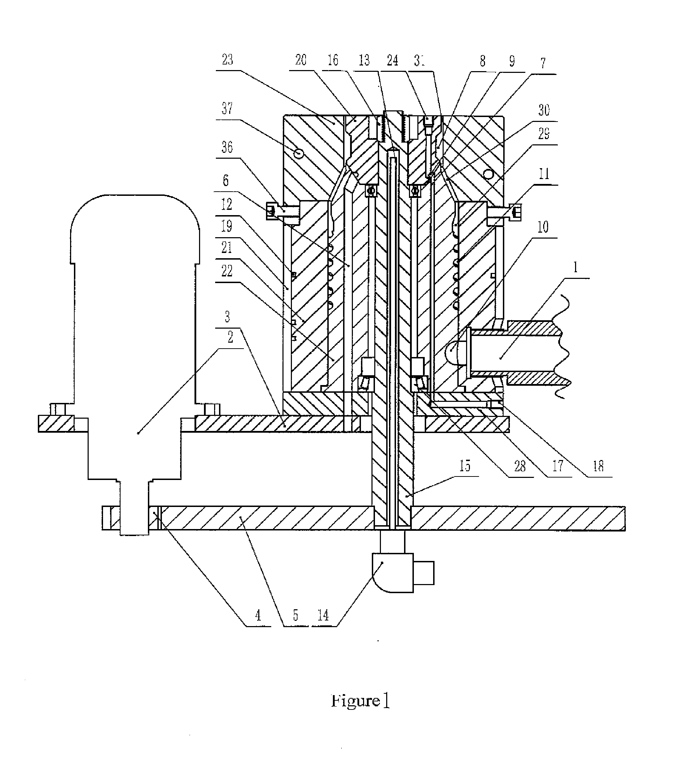

Fig.1 is a main sectional view of a rotating die of a film blowing machine according to an embodiment of the present invention.

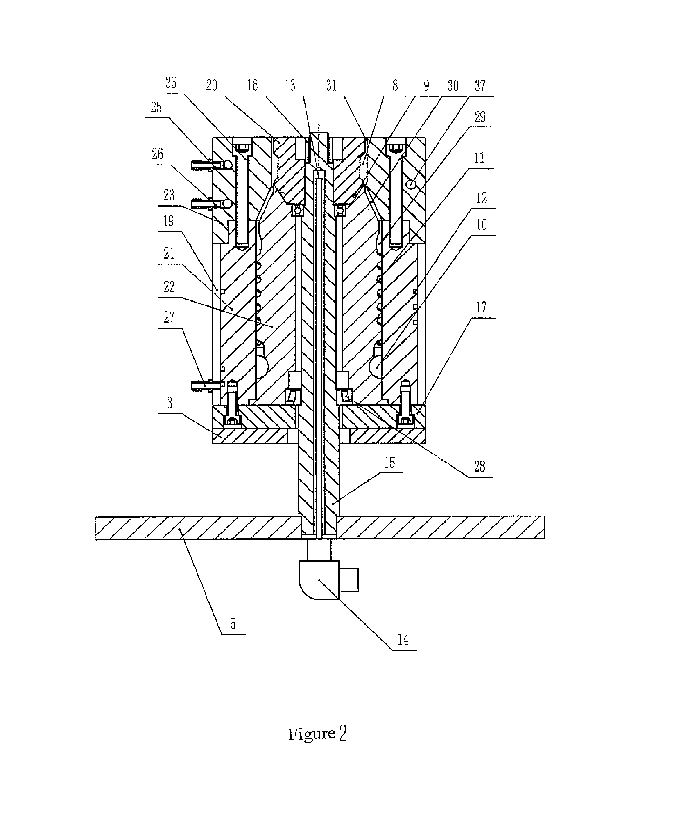

Fig. 2 is a left sectional view of the rotating die of the film blowing machine shown in Fig.1.

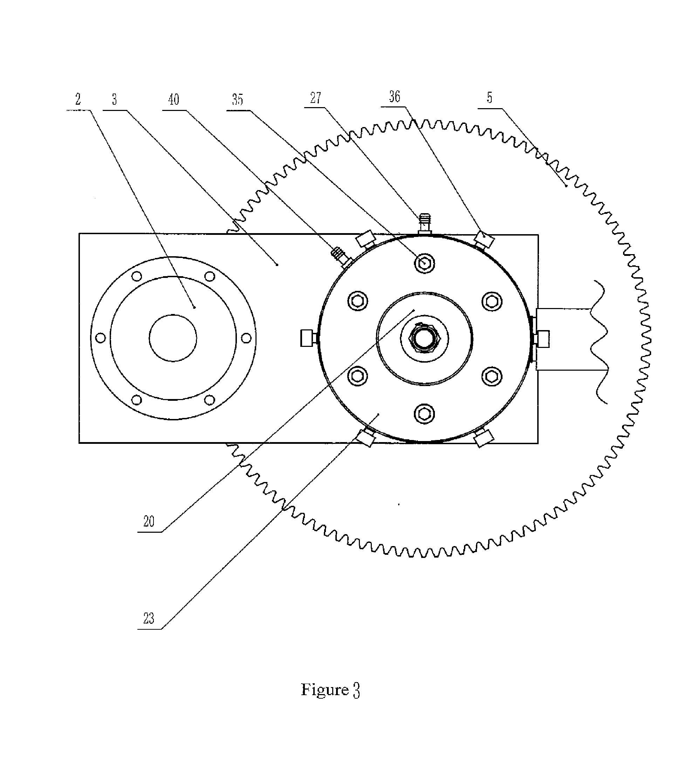

Fig. 3 is a top schematic view of the rotating die of the film blowing machine shown in Fig.1.

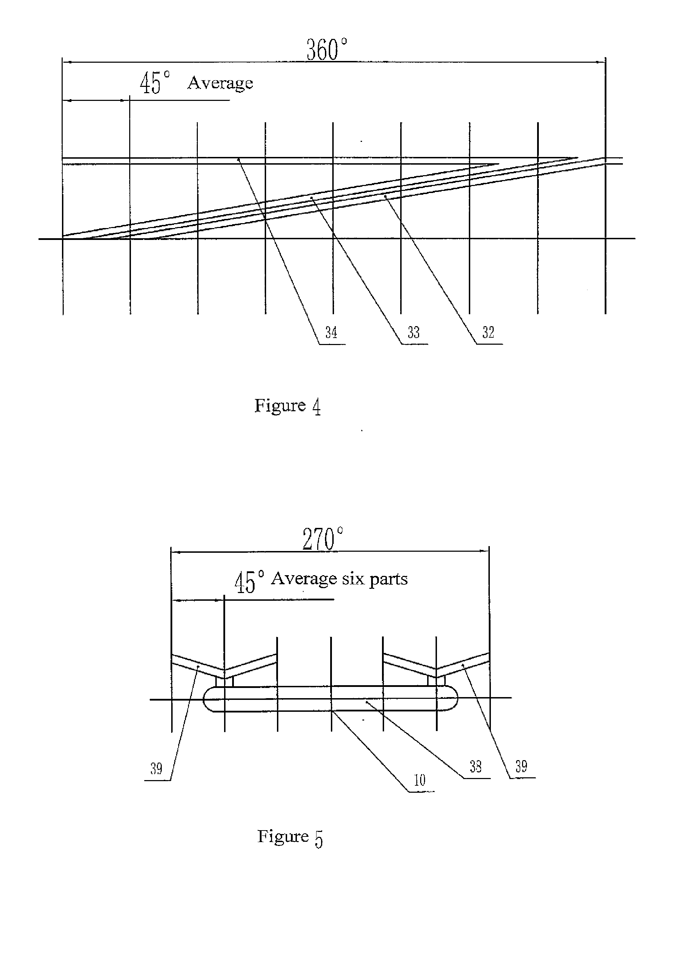

Fig. 4 is an unfolded schematic view of an outer circulation cooling water way shown in Fig. 1.
Fig. 5 is an unfolded schematic view of a herringbone feed-in slot shown in Fig. 1.

### Detailed Description of the Embodiments

The rotating die of the film blowing machine according to the invention will be further and detailedly illustrated by combining the drawings with the embodiments.
The rotating die of the film blowing machine for starch-based biodegradable material shown in the figures comprises a core mould and an outer body which are disposed concentric to form a material annular gap flow channel. The structures of the two parts are as following.

The core mould, which is a key part of the whole die, includes a spiral core mould 22 sleeved on a center pivot 15 through a supporting bearing 28 and a rotating core mould 20 fixed on a top end of the center pivot 15 through locknuts 16. A top end of the spiral core mould 22 is sunken to be an inner coniform surface, and a bottom end of the rotating core mould 20 is raised to form an outer coniform surface, which are jointed and cooperated with each other through technology. The locknuts 16 on the center pivot 15 can insure the cooperation of the spiral core mould 22 and the rotating core mould 20. It is pointed out specifically that the rotating core mould 20 rotates along with the center pivot 15, while the spiral core mould 22 does not rotate.

The center pivot 15 has a deep blind hole formed in an axis thereof, in which an internal circulation cooling pipe 13 is provided and at an end of which a rotating joint 14 cooperated with the internal circulation cooling pipe 13 is disposed so as to constitute an inner internal circulation water-cooling system of the die. Cooling water flows into the internal circulation cooling pipe 13 from the rotating joint 14 and flows out from a top end of the blind hole of the center pivot 15, and then flows downward along an inner wall of the blind hole of the center pivot 15, finally flows out from a water outlet of the rotating joint 14, which constitutes a complete water cooling circulation process.

The outer body is mainly formed by an inner die casing 21, an outer die casing 19 and a mouth die casing 23. The inner die casing 21 is clung to and sleeved on an outer wall of the spiral core mould 22, and they are in transition fit. The outer die casing 19 is clung to and sleeved on an outer wall of the inner die casing 21, and they are in transition fit. The mouth die casing 23 is disposed above the inner die casing 21 and the outer die casing 19 and surrounding the rotating core mould 20. An upper end of the inner die casing 21 is shaped as an annular platform, and a lower end of the mouth die casing 23 is shaped as a reversed annular platform, both of which are fastened with each other by vertical bolts 35 and finely adjusted and located through transverse bolts 36.

An outer circulation cooling water way 12 is formed between the outer wall of the inner die casing 21 and an inner wall of the outer die casing 19. The outer circulation cooling water way 12 consists of two spiral water slots 32, 33 and a 315° annular water slot 34 formed in the outer wall of the inner die casing 21. A lower end of the spiral water slot 32 is connected with a water inlet 27, and a lower end of the spiral water slot 33 is connected with a water outlet 40. Upper ends of the two spiral water slots 32, 33 are respectively connected with two ends of the 315° annular water slot 34. This constitutes an outer circulation water cooling system. The technology cooperation of the inner die casing 21 and the outer die casing 19 can ensure an airproof performance of the whole die casing.

A spiral circulation cooling water way 37 is formed in the wall of the mouth die casing 23. In order to machining a smooth eligible spiral circulation cooling water way 37, the mouth die casing 37 may be divided into four blocks to process and then welded together. Two ends of the spiral circulation cooling water way 37 are connected with exterior circulation cooling water source through a water inlet 25 of the mouth die casing and a water outlet 26 of the mouth die casing, respectively. The spiral circulation cooling water way 37 can water-cool the die to control its temperature effectively as a supplement to the outer circulation cooling water way 12.

Between the inner walls of the inner die casing 21 and the mouth die casing 23 and the outer walls of the spiral core mould 22 and the rotating core mould 20 is a material flowing and molding channel which consists of a herringbone feed-in slot 10, spiral conveying slots 11, an annular gap buffer zone 29, a tapering cone passage 30, an annular loosing cavity 8 and a final molding gap 31 in turn from bottom to top. The herringbone feed-in slot 10 is formed of a semicircular slot 38 and two reversed herringbone sub-slots 39 formed in the outer wall of the spiral core mould 22. Two ends of the semicircular slot 38 are respectively connected with two top ends of the two reversed herringbone sub-slots 39. There are four spiral conveying slots 11 whose lower ends are respectively connected with bottom ends of the two reversed herringbone sub-slots 39 and whose upper ends are connected with the annular gap buffer zone 29. The annular gap buffer zone 29 and the tapering cone passage 30, the annular loosing cavity 8, the final molding gap 31 above the annular gap buffer zone 29 are used to complete the process including increasing pressure, decreasing pressure, extruding and film blowing molding of the materials.

The core mould and the outer body are mounted on a die base 17. The inner die casing 21 may be fixed to the die base 17 by fixing bolts, and the die base 17 may be fixed on a connection plate 3 by fixing bolts. The connection plate 3 further has a motor 2 mounted thereon. An output end of the motor 2 is connected with a small gear 4, a lower end of the center pivot 15 passes through the connection plate 3 and connects with a big gear 5. The small gear 4 which works as an initiative gear and the big gear 5 which worked as a passive gear are engaged with each other so as to drive the center pivot 15 and the rotating core mould 20 at the top end of the rotating core mould 20 to rotate relative to the spiral core mould 22.

The die base 17 has a horizontal air intake 18 provided therein, the spiral core mould 22 has a vertical middle air passage 7 provided therein, and the rotating 20 has a horizontal annular air passage 9 and a vertical air outtake 24 formed therein. The air intake 18, the middle air passage 7, the annular air passage 9 and the air outtake 24 are connected in turn to supply compressed air so as to complete the final film blowing process of the die.

The spiral core mould 22 further has a sensor mounting hole 6 formed therein, which is extended from the bottom up to the outer coniform surface of the lower end of the rotating core mould 20, for mounting a temperature sensor which can monitor and feed back the temperature of the die such that the temperature sensor can work with the inner and outer water cooling system and a heating system of the die to maintain the processing temperature of the materials in a designed range.

The rotating die of the film blowing machine of the invention is suspended from a screw extruder in use. A screw sleeve output end 1 of the screw extruder passes through the outer die casing 19 and is connected to the inner die casing 21 with thread connection, and connected with the herringbone feed-in slot 10. The work process is as below.

Firstly, with being preplasticized through the screw extruder, the starch-based biodegradable material is extruded from the screw sleeve output end 1 into the herringbone feed-in slot 10. The materials firstly flow through the semicircular slot 38, and then flow into the top ends of the two reversed herringbone sub-slots 39 from two ends of the semicircular slot 38 and in turn the bottom ends of the two reversed herringbone sub-slots 39 such that the materials can be divided into two parts from one and then be divided into quarters from two parts via two flow passages with different directions. The speed and pressure of the materials are changed because of the extruding force speed, and the materials are equably transported to the spiral conveying slots 11 under a condition that the flow rate and the flow speed are ensured. A main function of the spiral conveying slot 11 is to change the internal stress of the materials' structure, which not only can make the temperature of the materials to be more even, but also can further plasticize the materials in the course of flowing so as to prepare for film blowing molding finally.

Secondly, the materials out of the spiral conveying slots 11 firstly flow into the annular gap buffer zone 29 to release the pressure so as to obtain a free and uniform state. And then the materials flow into the tapering cone passage 30 and the annular loosing cavity 8 in turn. At the same time, the motor 2 drives the center pivot 15, and therefore the rotating core mould 20 at the upper end of the center pivot 15 to rotate through the small gear 4 and the big gear 5. The rotating speed is about 2RPM. Under the forces of the extruding pressure and the rotating core mould 20, the materials complete the process of pressure reestablish and pressure release. The materials can have a more even temperature, pressure and flow speed by repeating the process so as to create best conditions for film blowing molding. Since the characteristics of high viscosity and poor fluidity of the starch-based biodegradable materials cause a ununiformity of the materials, the rotating core mould 20 is used to decrease and eliminate the ununiformity of the materials in the die such that the materials can have a better state in the course of film blowing, therefore improving the quality of the products and increasing the good product rate. When the materials are extruded via the final molding gap 31, they are distributed evenly because the rotation of the rotating core mould 20 effectively eliminates the internal stress and the velocity deviation of the materials, which lays a good foundation for film blowing.

Thirdly, when the materials flows through the material flowing and molding channel, the internal circulation cooling pipe 13 disposed in the blind hole of the center pivot 15, the outer circulation cooling water way 12 disposed between the inner die casing 21 and the outer die casing 19, and the spiral circulation cooling water way 37 disposed in the wall of the mouth die casing 23 are all in use to control the temperature of the die and the materials by water cooling. The reason for designing so many water cooling circulation systems is as below. Since the starch-based biodegradable materials have high viscosity and poor fluidity, after the materials are extruded into the die from the screw extruder, the internal frictional and shear heating is big. The self-heating in the following molding process is too fast, and it is sensitive to the processing temperature, which can easily cause a change of the materials' property. So the temperature is needed to be controlled in a reasonable range using a cooperation manner, such as monitoring and feeding back the temperature of the die with a temperature sensor located in the sensor mounting hole 6 for providing bases for adjusting the flow speed and flow rate of the circulation cooling water.

Fourthly, the materials out of the final molding gap 31 has a processing state suitable for film blowing already, and meanwhile, the film siphonula extruded out which is thicker and with a high temperature is rapidly puffed up to form a film sleeve with a required diameter due to the compressed air puffed out from the air outtake 24. The film sleeve will become a film product after cooled by an exterior air vane matched with the rotating die. And after the film product complete the processes including being cut, flattened, and rolled-up and so on, film goods in rolls can be obtained.

## Claims

1. A rotating die of a film blowing machine for starch-based biodegradable material, comprising a core mould and an out body which are concentric disposed,
wherein the core mould comprises a spiral core mould (22) sleeved on a center pivot (15) through a supporting bearing (28) and a rotating core mould (20) fixed on a top end of the center pivot (15) by locknuts (16), an inner coniform surface of a top end of the spiral core mould (22) is jointed and cooperated with an outer coniform surface of a bottom end of the rotating core mould (22);
the outer body comprises an inner die casing (21) sleeved on the spiral core mould (22), an outer die casing (19) in transition fit with the inner die casing (21) and a mouth die casing (23) surrounding the rotating core mould (20), an upper end of the inner die casing (21) is fixed with a lower end of the mouth die casing (23) through fixing elements, an outer circulation cooling water way (12) is formed between an outer wall of the inner die casing (21) and an inner wall of the outer die casing (19);
the inner walls of the inner die casing (21) and the mouth die casing (23) and the outer walls of the spiral core mould (22) and the rotating core mould (20) form a material flowing and molding channel consisting of a herringbone feed-in slot (10), spiral conveying slots (11), an annular gap buffer zone (29), a tapering cone passage (30), an annular loosing cavity (8) and a final molding gap (31) in turn from bottom to top;
the core mould and the outer body are mounted on a die base (17) fixed on a connection plate (3), a lower end of the center pivot (15) passes through the connection plate (3) and connects with a big gear (5), the connection plate (3) further has a motor (2) mounted thereon whose output end is connected with a small gear (4), the small gear (4) and the big gear (5) are engaged with each other so as to drive the center pivot (15) and the rotating core mould (20) at the top end thereof to rotate relative to the spiral core mould (22).

2. The rotating die of a film blowing machine for starch-based biodegradable material as claimed in claim 1, wherein the center pivot (15) has a deep blind hole formed in an axis thereof, in which an internal circulation cooling pipe (13) is provided and at an end of which a rotating joint (14) cooperated with the internal circulation cooling pipe (13) is disposed.

3. The rotating die of a film blowing machine for starch-based biodegradable material as claimed in claim 1 or 2, wherein an outer circulation cooling water way 12 consists of two spiral water slots (32, 33) and a 315° annular water slot (34) formed in the outer wall of the inner die casing (21), a lower end of the spiral water slot (32) is connected with a water inlet (27), a lower end of the spiral water slot (33) is connected with a water outlet (40), and upper ends of the two spiral water slots (32, 33) are respectively connected with two ends of the 315° annular water slot (34).

4. The rotating die of a film blowing machine for starch-based biodegradable material as claimed in claim 1 or 2, wherein the mouth die casing (23) has a spiral circulation cooling water way (37) formed in the wall thereof.

5. The rotating die of a film blowing machine for starch-based biodegradable material as claimed in claim 3, wherein the mouth die casing (23) has a spiral circulation cooling water way (37) formed in the wall thereof.

6. The rotating die of a film blowing machine for starch-based biodegradable material as claimed in claim 1 or 2, wherein the herringbone feed-in slot (10) comprises a semicircular slot (38) and two reversed herringbone sub-slots (39) formed in the outer wall of the spiral core mould (22), two ends of the semicircular slot (38) are respectively connected with two top ends of the two reversed herringbone sub-slots (39); there are four spiral conveying slots (11) whose lower ends are respectively connected with bottom ends of the two reversed herringbone sub-slots (39).

7. The rotating die of a film blowing machine for starch-based biodegradable material as claimed in claim 3, wherein the herringbone feed-in slot (10) comprises a semicircular slot (38) and two reversed herringbone sub-slots (39) formed in the outer wall of the spiral core mould (22), two ends of the semicircular slot (38) are respectively connected with two top ends of the two reversed herringbone sub-slots (39); there are four spiral conveying slots (11) whose lower ends are respectively connected with bottom ends of the two reversed herringbone sub-slots (39).

8. The rotating die of a film blowing machine for starch-based biodegradable material as claimed in claim 4, wherein the herringbone feed-in slot (10) comprises a semicircular slot (38) and two reversed herringbone sub-slots (39) formed in the outer wall of the spiral core mould (22), two ends of the semicircular slot (38) are respectively connected with two top ends of the two reversed herringbone sub-slots (39); there are four spiral conveying slots (11) whose lower ends are respectively connected with bottom ends of the two reversed herringbone sub-slots (39).

9. The rotating die of a film blowing machine for starch-based biodegradable material as claimed in claim 5, wherein the herringbone feed-in slot (10) comprises a semicircular slot (38) and two reversed herringbone sub-slots (39) formed in the outer wall of the spiral core mould (22), two ends of the semicircular slot (38) are respectively connected with two top ends of the two reversed herringbone sub-slots (39); there are four spiral conveying slots (11) whose lower ends are respectively connected with bottom ends of the two reversed herringbone sub-slots (39).
